# EUROPEAN PATENT APPLICATION

(11) **EP 4 492 236 A1**
(43) Date of publication of application: **15.01.2025**
(21) Application number: 23784376.8
(22) Date of filing: 08.04.2023
(51) Int. Cl.: G06F 9/50

(54) **DATA PROCESSING METHOD AND APPARATUS FOR FUSION SYSTEM, DEVICE AND SYSTEM**

(30) Priority: 08.04.2022 CN 202210369243; 06.06.2022 CN 202210633694
(71) Applicant: Huawei Technologies Co., Ltd., Shenzhen, Guangdong 518129 (CN)
(72) Inventor: SUN, Hongwei, Shenzhen, Guangdong 518129 (CN); LI, Guangcheng, Shenzhen, Guangdong 518129 (CN); LIU, Huawei, Shenzhen, Guangdong 518129 (CN); YOU, Jun, Shenzhen, Guangdong 518129 (CN); CUI, Wenlin, Shenzhen, Guangdong 518129 (CN)
(74) Representative: Gill Jennings & Every LLP
(86) International application number: PCT/CN2023/087164
(87) International publication number: WO 2023/193814

(57) **Abstract**

A data processing method and a data processing apparatus for a converged system, a device, and a system are disclosed, and relate to the data field. The converged system includes a computing node and a storage node. The computing node is connected to the storage node through a network, to build a storage-computing decoupled architecture. A storage medium of the computing node and a storage medium of the storage node form a global memory pool through unified addressing, namely, a global storage medium shared by the computing node and the storage node. When a read/write operation is performed in the system, processing request data is obtained, and a memory operation of the processing request data is performed on the global memory pool based on a memory operation instruction. Therefore, the storage-computing decoupled architecture including the global memory pool ensures that computing and storage can be flexibly expanded respectively on demand, and the read/write operation can be quickly performed in the system, thereby shortening end-to-end data processing duration, increasing a data transmission speed, reducing system energy consumption, and improving a system performance bottleneck.

## Description

This application claims priority to Chinese Patent Application No. 202210369243.7, filed with the China National Intellectual Property Administration on April 8, 2022 and entitled "CONVERGED SYSTEM FOR COMPUTING AND STORAGE", and Chinese Patent Application No. 202210633694.7, filed with the China National Intellectual Property Administration on June 6, 2022 and entitled "DATA PROCESSING METHOD AND DATA PROCESSING APPARATUS FOR CONVERGED SYSTEM, DEVICE, AND SYSTEM". The foregoing two patent applications are incorporated in this application by reference in their entireties.

### TECHNICAL FIELD

This application relates to the data field, and in particular, to a data processing method and a data processing apparatus for a converged system, a device, and a system.

### BACKGROUND

Storage and computing are two key systems of a distributed application (such as big data or a database), and determine overall performance and power consumption of a system. The computing and the storage are usually deployed on a same node, and system performance is high. However, a storage to computing ratio is fixed, and the computing and the storage cannot be flexibly expanded respectively. Then, a storage-computing decoupled architecture emerges. A storage cluster and a computing cluster are connected through a network, so that the computing and the storage are flexibly expanded respectively on demand. However, a plurality of types of conversion operations such as protocol conversion and format conversion need to be performed on data from a computing side to a storage side. As a result, data processing duration is long and system energy consumption is high, and system performance becomes a bottleneck.

### SUMMARY

This application provides a data processing method and a data processing apparatus for a converged system, a device, and a system, to shorten data processing duration, increase a data transmission speed, and reduce system energy consumption.

According to a first aspect, a data processing method for a converged system is provided. The converged system includes a computing node and a storage node. The computing node is connected to the storage node through a network to build a storage-computing decoupled architecture. A storage medium of the computing node and a storage medium of the storage node form a global memory pool through unified addressing, that is, a global memory shared by the computing node and the storage node. When a read/write operation is performed in the system, processing request data is obtained, and a memory operation of the processing request data is performed on the global memory pool based on a memory operation instruction.

In this way, because the memory operation instruction is a technology of performing a memory operation on a memory through a memory interface, the memory operation of the processing request data is performed, based on the memory operation instruction, on the global memory shared by the computing node and the storage node, thereby avoiding that data needs to be converted from a computing side to a storage side through a plurality of conversion operations such as protocol conversion and format conversion, and effectively simplifying a data migration process between the computing node and the storage node. Therefore, the storage-computing decoupled architecture including the global memory pool ensures that computing and storage can be flexibly expanded respectively on demand, and a read/write operation can be quickly performed in the system, thereby shortening end-to-end data processing duration, increasing a data transmission speed, reducing system energy consumption, and improving a system performance bottleneck.

The memory operation instruction includes at least one of memory allocation, memory setting, memory copying, memory movement, memory release, and memory comparison. A type of a storage medium of the global memory pool is not limited in this embodiment of this application. The storage medium of the global memory pool includes a memory, a hard disk, a memory server, and a storage-class memory (storage-class memory, SCM). In this way, the global memory pool including a plurality of storage media is introduced into a distributed processing system, so that a storage medium for storing data has more possibilities. A matched storage medium is selected to store data, so that the read/write operation can be quickly performed in the system, the data transmission speed is increased, and the end-to-end data processing duration is shortened.

In a possible implementation, that the system performs a memory operation of the processing request data on a global memory pool based on a memory operation instruction includes: reading to-be-processed data from the global memory pool; and processing the to-be-processed data based on the processing request data through the memory operation instruction, to obtain processed data, and writing the processed data into storage space indicated by a first address in the global memory pool. The storage space indicated by the first address includes one of storage space provided by the storage medium of the computing node and storage space provided by the storage medium of the storage node.

The computing node may determine the storage space indicated by the first address according to a storage policy. For example, the computing node determines the storage space indicated by the first address based on an access characteristic of an application.

Example 1: Determining, based on a user requirement and a storage medium characteristic, to write the processed data into the storage space indicated by the first address in the global memory pool. The storage medium characteristic includes at least one of a writing latency, a read latency, a total storage capacity, an available storage capacity, an access speed, central processing unit CPU consumption, an energy consumption ratio, and reliability. Therefore, the read/write operation is performed in the system based on the user requirement and the storage medium characteristic of the system. This not only enhances control permission of a user over the system, improves system experience of the user, but also extends an application scenario applicable to the system.

Example 2: The determining, based on a user requirement and a storage medium characteristic, to write the processed data into storage space indicated by the first address in the global memory pool includes: determining, based on the user requirement and the storage medium characteristic, to write the processed data into storage space of a computing node indicated by the first address in the global memory pool. Therefore, the processed data is stored in a local memory on the computing side in the global memory pool, to perform a local memory access, thereby effectively shortening the data processing duration and improving the data transmission speed.

Example 3: The determining, based on a user requirement and a storage medium characteristic, to write the processed data into storage space indicated by a first address in a global memory pool includes: determining, based on the user requirement and the storage medium characteristic, to write the processed data into storage space of a storage node indicated by the first address in the global memory pool. Therefore, the processed data is stored in a memory on the storage side in the global memory pool, thereby improving data reliability and persistence.

In another possible implementation, after the writing the processed data into storage space indicated by a first address in the global memory pool, the method further includes: reading the processed data from the global memory pool based on the first address.

For example, when data stored in the global memory pool is written into a disk, the reading the processed data from the global memory pool based on the first address includes: when the processed data needs to be persisted, the computing node reads the processed data from the global memory pool based on the first address, and writes the processed data into the storage node.

For another example, when the computing node in the converged system uses the processed data, the computing node reads the processed data from the global memory pool based on the first address.

In another possible implementation, the method further includes: when the processed data is read from the global memory pool based on the first address, a memory operation of another processing request data is performed on the global memory pool based on the memory operation instruction.

Therefore, data processing efficiency and the data transmission speed are improved from a perspective of an application, and system resource utilization is improved from a perspective of a hardware device.

In another possible implementation, the method further includes: prefetching data from the storage node based on the memory operation instruction, and storing the data in the global memory pool. Therefore, the computing node can quickly obtain the data, thereby shortening the data processing duration.

In another possible implementation, the method further includes: performing a memory operation on data between the global memory pool and the storage node based on a characteristic of cold/hot data and the memory operation instruction. Cold data refers to data that is seldom accessed. The cold data is migrated from the global memory pool to the storage node, to release storage space of the global memory pool and improve storage space utilization of the global memory pool. Hot data refers to data that is frequently accessed. The hot data is migrated from the storage node to the global memory pool, so that the computing node obtains required data as soon as possible, thereby shortening the data processing duration and reducing computing resources occupied by frequent data reading and writing.

According to a second aspect, a data processing apparatus for a converged system is provided. The apparatus includes modules configured to perform the data processing method for the converged system in any one of the first aspect or the possible designs of the first aspect.

According to a third aspect, a computing device is provided. The computing device includes at least one processor and a storage. The storage is configured to store a group of computer instructions, and when the processor is used as a computing node in any one of the first aspect or the possible implementations of the first aspect to execute the group of computer instructions, the processor performs operation steps of the data processing method for a converged system in any one of the first aspect or the possible implementations of the first aspect.

According to a fourth aspect, a computer-readable storage medium is provided, including computer software instructions. When the computer software instructions are run on a computing device, the computing device is enabled to perform operation steps of the method in any one of the first aspect or the possible implementations of the first aspect.

According to a fifth aspect, a computer program product is provided. When the computer program product runs on a computer, a computing device is enabled to perform operation steps of the method in any one of the first aspect or the possible implementations of the first aspect.

Based on the implementations provided in the foregoing aspects, technologies in this application may be further combined to provide more implementations.

### BRIEF DESCRIPTION OF DRAWINGS

FIG. 1 is a schematic architectural diagram of a data processing system according to an embodiment of this application;
FIG. 2 is a schematic diagram of distributed data processing according to an embodiment of this application;
FIG. 3 is a schematic diagram of a global memory pool deployment scenario according to an embodiment of this application;
FIG. 4 is a schematic diagram of a storage system with a three-layer structure according to an embodiment of this application;
FIG. 5 is a schematic process diagram of a data processing method according to an embodiment of this application;
FIG. 6 is a schematic process diagram of another data processing method according to an embodiment of this application;
FIG. 7 is a schematic process diagram of processing a Map task and a Reduce task based on a global memory pool according to an embodiment of this application;
FIG. 8 is a schematic diagram of a structure of a data processing apparatus according to an embodiment of this application; and
FIG. 9 is a schematic diagram of a structure of a computing device according to an embodiment of this application.

### DESCRIPTION OF EMBODIMENTS

With development of services such as an internet, an internet of things, a network bandwidth, an intelligent terminal, and cloud computing, data types and data scales are developing at an unprecedented speed. Applications such as big data, a database, and high-performance computing (High Performance Computing, HPC) emerge, and data is transformed from a single processing object to a basic resource.

The big data is a data set that cannot be captured, managed, and processed through a conventional software tool within a time period. Because a large amount of data included in the big data is associated with each other, a data analysis method, model, or tool is used to analyze the big data, mine data relationships in the big data, and make a prediction or a decision based on the data relationships in the big data. For example, shopping trend data of a user is analyzed, and an item that may be purchased by the user are pushed to the user, to improve user shopping experience. Therefore, the big data features a large capacity, a fast growth rate, a diversified data type, high utilization value, and the like.

The database is a computer software system that stores and manages data based on a data structure. It may also be understood that the database is a set for storing and managing a large amount of data in a computer, that is, an electronic file cabinet. The data may include a travel record, a consumption record, a browsed web page, a sent message, an image, music, sound, and the like.

Because a data capacity of these applications is very large, a single computing node cannot meet a computing requirement. Generally, a distributed data processing system is used to process data.

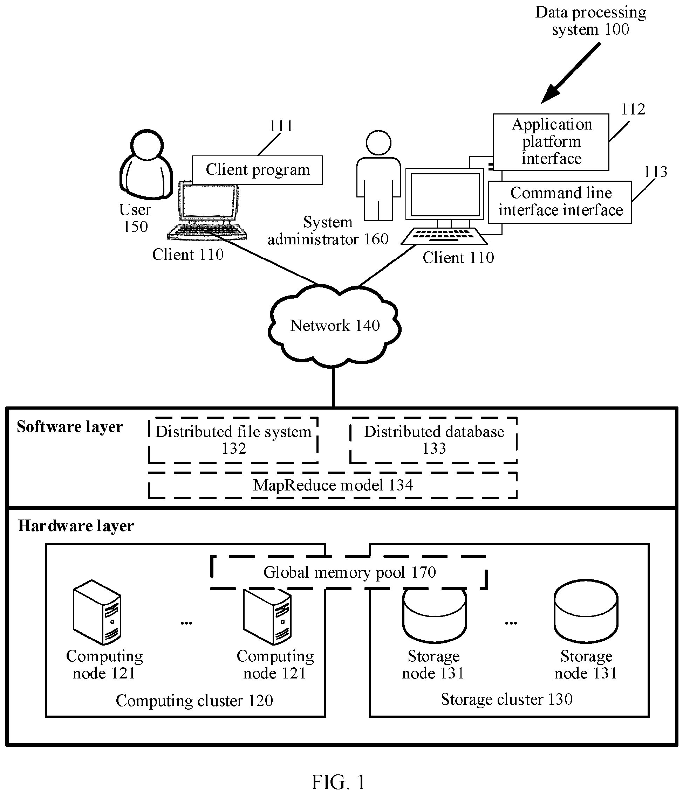

FIG. 1 is a schematic architectural diagram of a data processing system according to an embodiment of this application. As shown in FIG. 1, the data processing system 100 includes a client 110, a computing cluster 120, and a storage cluster 130.

The storage cluster 130 includes at least two storage nodes 131. One storage node 131 includes one or more controllers, a network interface card, and a plurality of hard disks. The hard disk is used to store data. The hard disk may be a magnetic disk or another type of storage medium, for example, a solid-state disk or a shingled magnetic recording hard disk. The network interface card is configured to communicate with a computing node 121 included in the computing cluster 120. The controller is configured to write data into the hard disk or read data from the hard disk based on a data read/write request sent by the computing node 121. In a data read/write process, the controller needs to convert an address carried in the data read/write request into an address that can be identified by the hard disk.

The client 110 communicates with the computing cluster 120 and the storage cluster 130 through a network 140. For example, the client 110 sends a service request to the computing cluster 120 through the network 140, and requests the computing cluster 120 to perform distributed processing on service data included in the service request. The network 140 may refer to an internal network of an enterprise (for example, a local area network (Local Area Network, LAN)) or the Internet (Internet).

The data processing system 100 supports running applications such as big data, a database, high-performance computing, artificial intelligence, distributed storage, and cloud native. It may be understood that the service data in this embodiment of this application includes data of applications such as the big data, the database, the high-performance computing, the artificial intelligence (Artificial Intelligence, AI), the distributed storage, and the cloud native.

In some embodiments, the storage cluster 130 stores and manages a large amount of data based on a distributed file system 132 and a distributed database 133. A client program 111 is installed on the client 110. The client 110 runs the client program 111 to display a user interface (user interface, UI). A user 150 operates the user interface to access the distributed file system 132 and the distributed database 133 to obtain data, and indicates the computing cluster 120 to process a data service. The client 110 may refer to a computer connected to the network 140, or may be referred to as a workstation (workstation). Different clients can share network resources (such as a computing resource and a storage resource).

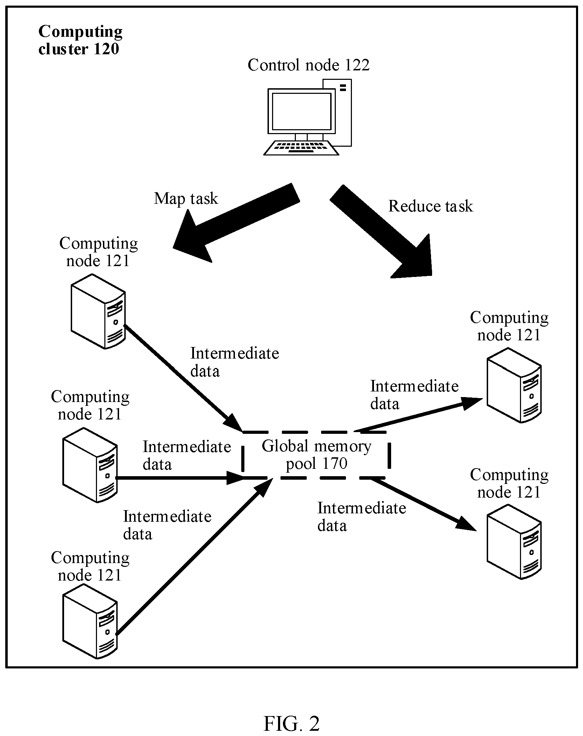

The computing cluster 120 includes at least two computing nodes 121, and the computing nodes 121 may communicate with each other. The computing node 121 is a computing device, such as a server, a desktop computer, or a controller of a storage array. For example, a big data service submitted by the client 110 may be referred to as a job (job). A job can be divided into a plurality of tasks (task). A plurality of computing nodes execute the plurality of tasks in parallel. When all tasks end, a job is completed. A task is generally a process of processing a part of data in a job or a phased processing process. All the tasks are scheduled to be completed in parallel or in serial. In some embodiments, the computing cluster 120 performs the distributed processing on the big data service based on a MapReduce (MapReduce) model 134. The MapReduce model is a distributed programming model, that is, the big data service is decomposed into a map (map) task and a reduce (reduce) task. A plurality of computing nodes 121 execute the map task, collect a processing result, and execute the reduce task. In some embodiments, as shown in FIG. 2, the computing cluster 120 includes a control node 122 and at least two computing nodes 121. The control node and the computing node may be independent physical devices, and the control node may also be referred to as a control device or a naming node. The computing node may be referred to as a computing device or a data node. The control node 122 is configured to manage name space of the distributed file system and access of the client 110 to the distributed file system. In addition, the control node 122 indicates a computing node that executes a map task and a computing node that executes a reduce task. The computing node stores, based on the MapReduce model 134, intermediate data (or referred to as map data or shuffle data) obtained by executing the map task, in a global memory pool 170. The computing node that executes the reduce task reads the intermediate data from the global memory pool 170. Optionally, when storing data, the storage cluster 130 may alternatively process the data based on the MapReduce model 134 and then store the data.

In some other embodiments, a system administrator 160 may invoke an application platform interface (application platform interface, API) 112, a command-line interface (command-line interface, CLI) interface 113, or a graphical user interface (Graphical User Interface, GUI) through the client 110 to access the distributed file system 132 and the distributed database 133, so as to configure system information, and the like, for example, deployment information and a storage policy of the global memory pool 170 that is configured for the computing node 121 and the storage node 131, that is formed through unified addressing, and that is provided in this embodiment of this application.

Embodiments of this application provide a computing-memory converged architecture and a data processing method based on a memory operation instruction, that is, a global memory pool that is formed through unified addressing based on a storage medium of the computing node and a storage medium of the storage node, and a technology of performing a memory operation of processing request data on a global memory pool based on a memory operation instruction. In this way, a problem of flexible capacity expansion of a computing-memory integration is solved, and a performance problem of a storage-computing decoupled is solved. In this embodiment of this application, the performing a memory operation of processing request data on a global memory pool based on a memory operation instruction includes a read operation and a write operation on the global memory pool. A data processing system configured with a global memory pool may also be referred to as a converged system. The memory operation instruction is a technology of performing a memory operation on a storage medium through a memory interface. Because computing and storage convergence is performed on two different memory operations on a computing side and a storage side based on the memory operation instruction by using the global memory pool that is uniformly compiled globally, to be specific, a memory operation of the processing request data is performed, based on the memory operation instruction, on a global storage medium shared by the computing node and the storage node, a data migration process between the computing node and the storage node is effectively simplified, and data does not need to be converted from the computing side to the storage side through a plurality of conversion operations such as protocol conversion and format conversion. Therefore, based on a storage-computing decoupled architecture with the global memory pool, the computing and the storage can be flexibly expanded respectively on demand, and a read/write operation can be quickly performed in the system, thereby shortening end-to-end data processing duration, increasing a data transmission speed, reducing system energy consumption, and improving a system performance bottleneck.

For example, a format conversion includes serialization and deserialization. The serialization is a process of converting an object into a byte sequence. The deserialization is a process of restoring a byte sequence to an object.

It should be noted that the global memory pool provided in this embodiment of this application may include a storage medium of a computing node and a storage medium of a storage node in a data processing system. The storage medium of the computing node includes at least one of a local storage medium in the computing node and an extended storage medium connected to the computing node. The storage medium of the storage node includes at least one of a local storage medium in the storage node and an extended storage medium connected to the storage node.

For example, the global memory pool includes the local storage medium in the computing node and the local storage medium in the storage node.

For another example, the global memory pool includes any one of the local storage medium in the computing node, the extended storage medium connected to the computing node, the local storage medium in the storage node, and the extended storage medium connected to the storage node.

For another example, the global memory pool includes the local storage medium in the computing node, the extended storage medium connected to the computing node, the local storage medium in the storage node, and the extended storage medium connected to the storage node.

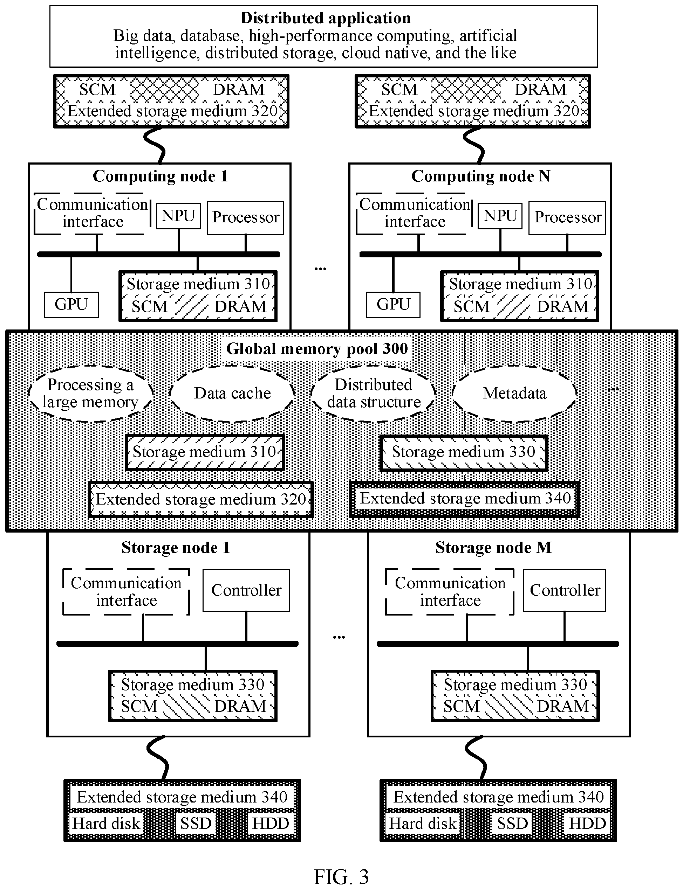

For example, FIG. 3 is a schematic diagram of a deployment scenario of a global memory pool according to an embodiment of this application. The global memory pool 300 includes a storage medium 310 in each of the N computing nodes, an extended storage medium 320 connected to each of the N computing nodes, a storage medium 330 in each of the M storage nodes, and an extended storage medium 340 connected to each of the M storage nodes.

It should be understood that a storage capacity of the global memory pool may include a part of a storage capacity in the storage medium of the computing node and a part of a storage capacity in the storage medium of the storage node. The global memory pool is a storage medium that can be accessed by both a computing node and a storage node that are uniformly addressed. The storage capacity of the global memory pool may be used by the computing node or the storage node through the memory interface such as a large memory, a distributed data structure, a data cache, or metadata. When running an application program, the computing node can use these memory interfaces to perform the memory operation on the global memory pool. In this way, the global memory pool constructed based on the storage capacity of the storage medium of the computing node and the storage medium of the storage node provides a unified memory interface for the computing node in the northbound direction, so that the computing node writes, through the unified memory interface, data into storage space provided by the computing node or storage space provided by the storage node in the global memory pool, to implement the computing and the storage of the data based on the memory operation instruction.

The foregoing is described by using an example in which the storage medium in the computing node and the storage medium in the storage node construct the global memory pool. A deployment manner of the global memory pool may be flexible and changeable. This is not limited in this embodiment of this application. For example, the global memory pool is constructed by the storage medium of the storage node, for example, a high-performance storage layer (Global Cache). For another example, the global memory pool is constructed by the storage medium of the computing node, for example, a high-performance storage layer. Using a storage medium of an independent storage node or a storage medium of an independent computing node to construct the global memory pool can reduce occupation of storage resources on a storage side and provide a more flexible expansion solution.

It should be noted that a storage is a memory device configured to store a program and various data. A larger capacity of the storage indicates a lower access speed. On the contrary, a smaller capacity of the storage indicates a higher access speed. The access speed refers to a data transmission speed when data is written into or read from the storage. The access speed may also be referred to as a read/write speed. The storage may be divided into different layers based on a storage capacity and an access speed.

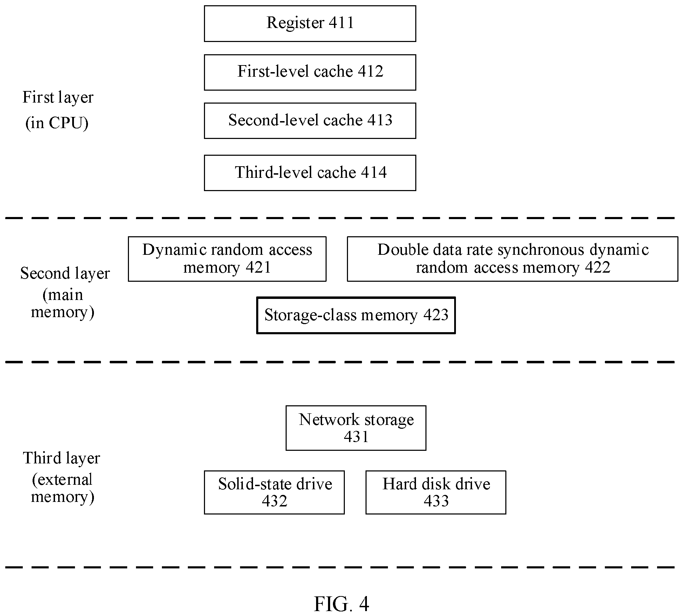

For example, FIG. 4 is a schematic diagram of storage system with a three-layer structure according to an embodiment of this application. From a first layer to a third layer, a storage capacity increases layer by layer, an access speed decreases layer by layer, and costs reduce layer by layer. As shown in FIG. 4, the first layer includes a register 411, a first-level cache 412, a second-level cache 413, and a third-level cache 414 that are located in a central processing unit (central processing unit, CPU). A storage included in the second layer may be used as a main memory of a computer system, for example, a dynamic random access memory (Dynamic Random Access Memory, DRAM) 421, a double data rate synchronous dynamic random access memory (double data rate SDRAM, DDR SDRAM) 422, and a storage-class memory (storage-class memory, SCM) 423. The main memory may be referred to as a main memory or a memory for short, that is, a storage that exchanges information with the CPU. A storage included in the third layer may be used as a secondary memory of the computer system, for example, a network storage 431, a solid-state drive (Solid State Disk or Solid-State Drive, SSD) 432, and a hard disk drive (Hard Disk Drive, HDD) 433. The secondary memory may be referred to as a secondary memory or an external memory for short. Compared with the main memory, the external memory has a large storage capacity and a low access speed. It can be learned that a storage closer to the CPU has a smaller capacity, a higher access speed, a larger bandwidth, and a smaller delay. Therefore, the storage included in the third layer stores data that is not frequently accessed by the CPU, thereby improving data reliability. The storage included in the second layer may be used as a cache device, and is configured to store data frequently accessed by the CPU, thereby significantly improving access performance of the system.

A storage medium of the global memory pool provided in this embodiment of this application includes a memory (for example, a DRAM), an SSD, a hard disk, a memory server, and an SCM.

In some embodiments, the global memory pool may be set based on a type of a storage medium, that is, a memory pool is constructed by using a type of storage medium, and different types of storage media are used to construct different types of global memory pools, so that the global memory pools are used in different scenarios. The computing node selects a storage medium based on an access characteristic of an application, thereby enhancing control permission of a user over the system, improving system experience of the user, and extending an application scenario applicable to the system. For example, unified addressing is performed on a DRAM in the computing node and a DRAM in the storage node to form a DRAM memory pool. The DRAM memory pool is applied to a scenario that requires high access performance, has a moderate data capacity, and has no requirement for data persistence. For another example, unified addressing is performed on an SCM in the computing node and an SCM in the storage node to form an SCM memory pool. The SCM memory pool is applied to a scenario that is insensitive to access performance, has a big data capacity, and has a requirement for data persistence.

Different storage media have different storage medium characteristics. The storage medium characteristic includes at least one of a writing latency, a read latency, a total storage capacity, an available storage capacity, an access speed, CPU consumption, an energy consumption ratio, and reliability. The writing latency is a latency of writing data into a storage medium by the computing node 121. The read latency is a latency of reading data from the storage medium by the computing node 121. A storage capacity refers to a total storage capacity of a storage medium for storing data. The available storage capacity is a remaining storage capacity obtained by subtracting a used storage capacity from the total storage capacity. The access speed is a speed at which the computing node 121 performs a read/write operation on the storage medium. The CPU consumption refers to usage of a CPU of the computing node 121 used by the computing node 121 to write data to the storage medium or read data from the storage medium. The energy consumption ratio refers to energy (such as electric energy) consumed in a unit time. The reliability refers to durability of data stored in the storage medium.

The following describes a data processing method for a converged system provided in embodiments of this application in detail with reference to the accompanying drawings.

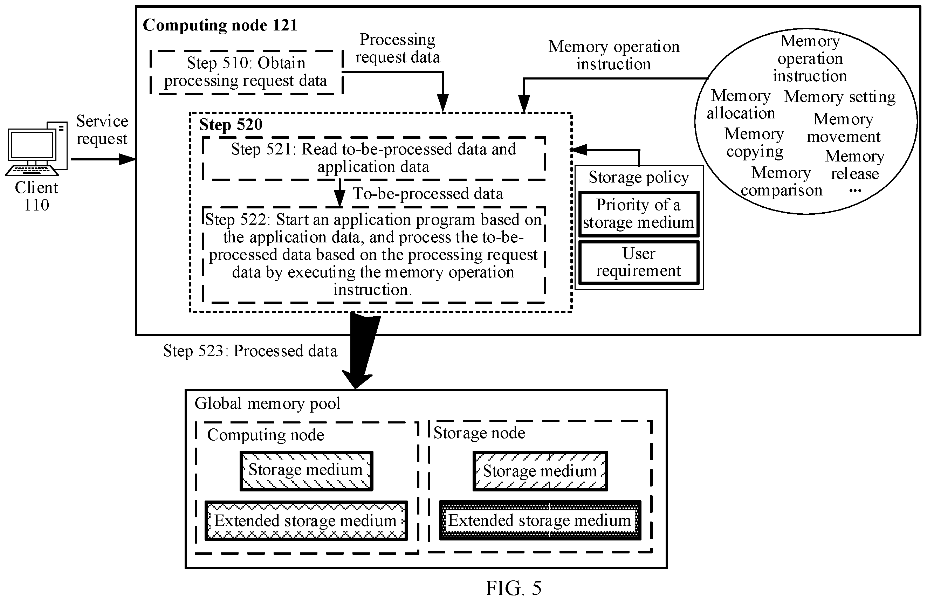

FIG. 5 is a schematic flowchart of a data processing method for a converged system according to an embodiment of this application. A client 110, a computing cluster 120, and a storage cluster 130 are used as an example for description. The computing cluster 120 includes a control node 122 and at least two computing nodes 121. The storage cluster 130 includes at least two storage nodes 131. The control node 122 is configured to control the computing node 121 to perform distributed data processing. The computing node 121 and the storage node 131 are configured with a global memory pool 170. The global memory pool 170 includes a storage medium of the computing node 121 and a storage medium of the storage node 131. As shown in FIG. 5, the method includes the following steps.

Step 510: The computing node 121 obtains processing request data.

The client 110 responds to a user operation, and sends a service request of a data service to the control node 122. The control node 122 may receive, through a local area network or the Internet, a service request that is of a big data service and that is sent by the client 110. The service request may include a service identifier and service data. The service identifier is used to uniquely indicates one data service. The service data may be data used by the computing node to perform distributed data processing or identification data indicating to-be-processed data.

The user operation may be an operation performed by a user on a big data user interface to submit the big data service. The big data service includes data analysis service, data query service, data modification service, and the like. For example, the big data service refers to analyzing personal data and purchase behavior data of customers to describe user profiles and classify the customers, so that targeted products or preferential products can be recommended to specific customers, thereby improving customer satisfaction, enhancing customer relationships, and the like. For another example, the big data service refers to analyzing a historical sales volume of a product, predicting a future sales volume of the product, finding reasons for decrease or increase in the sales volume, and recommending constructive suggestions for improving the sales volume.

The user operation may alternatively refer to an operation performed by the user on a database user interface to submit a database service, or the like. Database operations include database creating, deleting, modifying, querying, and the like.

The computing node 121 may receive a service request sent by the control node 122, and convert the service request into processing request data that meets an operation rule of a memory operation instruction, so that the computing node 121 performs a memory operation of the processing request data on the global memory pool based on the memory operation instruction.

Step 520: The computing node 121 performs the memory operation of the processing request data on the global memory pool based on the memory operation instruction.

The memory operation instruction may also be referred to as a memory semantic or a memory operation function. The memory operation instruction includes at least one of memory allocation (malloc), memory setting (memset), memory copying (memcpy), memory movement (memmove), memory release (memory release), and memory comparison (memcmp).

The memory allocation is used to allocate a segment of memory for supporting running of an application program.

The memory setting is used to set a data mode of the global memory pool, for example, initialization.

The memory copying is used to copy data stored in storage space indicated by a source address (source) to storage space indicated by a destination address (destination).

The memory movement is used to copy data stored in the storage space indicated by the source address (source) to the storage space indicated by the destination address (destination), and delete the data stored in the storage space indicated by the source address (source).

The memory comparison is used to compare whether data stored in two pieces of storage space is equal.

The memory release is used to release data stored in a memory to improve utilization of system memory resources and improve system performance.

The processing request data is used to indicate an operation performed on the to-be-processed data. For example, the processing request data indicates to obtain a sales volume of product A in a first quarter. The to-be-processed data may include annual sales. Specific operation processes included in step 520 are described in the following step 521 to step 523.

Step 521: The computing node 121 reads the to-be-processed data and application data.

The to-be-processed data and the application data may be stored in storage space such as the global memory pool, a storage medium of a storage node, or a storage medium of a computing node. The computing node 121 may read the to-be-processed data and the application data from the global memory pool, the storage medium of the storage node, or the storage medium of the computing node. For example, the computing node 121 reads the application data from a local memory, and reads the to-be-processed data from the global memory pool. The to-be-processed data may be an object that needs to be processed based on an indication of the processing request data. The application data includes an application program and application configuration data.

Step 522: The computing node 121 starts the application program based on the application data, and processes the to-be-processed data based on the processing request data by executing the memory operation instruction, to obtain processed data.

For example, it is assumed that the application data includes a database application program and database configuration data, and the processing request data is used to indicate to sort to-be-processed data of terabyte (Terabyte, TB). The computing node 121 starts database based on database application data, obtains the to-be-processed data, and sorts the to-be-processed data.

It should be noted that the computing node 121 may start an application program based on the application data before obtaining the processing request data, or may start an application program based on the application data after obtaining the processing request data.

In this way, data processing based on a memory operation instruction may be used in a full life cycle of data processing, and the data processing is performed by executing the memory operation instruction, to implement de-input/output (Input/Output, I/O) processing and an extremely high-speed end-to-end data access. In combination with a global memory pool that converges computing and memory, format and protocol conversion in data migration are avoided, and end-to-end data processing duration is effectively reduced.

Step 523: The computing node 121 writes the processed data into storage space indicated by a first address in the global memory pool.

The computing node 121 automatically selects, from the global memory pool based on a storage policy, a storage medium used to store the processed data. The storage policy includes an access characteristic of an application, a storage medium characteristic in a global memory pool, and the like. The storage space indicated by the first address includes one of storage space provided by the storage medium of the computing node 121 and storage space provided by the storage medium of the storage node 131.

In some embodiments, the computing node 121 determines, based on a user requirement and a storage medium characteristic, to write the processed data into the storage space indicated by the first address in the global memory pool. The user requirement is used to indicate requirements related to the storage medium characteristic. The processing request data includes the user requirement. The storage medium characteristic includes at least one of a writing latency, a read latency, a total storage capacity, an available storage capacity, an access speed, central processing unit CPU consumption, an energy consumption ratio, and reliability.

For example, the computing node 121 is configured with storage medium characteristics of a plurality of types of storage media. The user requirement indicates an access speed range or a specific access speed, and the computing node 121 determines, from the global memory pool, a storage medium that meets the user requirement. For example, the user requirement indicates an access speed of a memory. The computing node 121 selects, from the global memory pool, a storage medium that meets the access speed of a memory, for example, at least one of a memory, a DRAM, or an SCM. Example 1: The computing node 121 determines, based on the user requirement and the storage medium characteristic, to write the processed data into the storage space that is of the computing node and that is indicated by the first address in the global memory pool. The storage space that is of the computing node and that is indicated by the first address meets an access speed indicated by the user requirement. Therefore, the processed data is stored in a local memory on the computing side in the global memory pool, to perform a local memory access, thereby effectively shortening the data processing duration and improving the data transmission speed.

For another example, the computing node 121 is configured with an association relationship between a storage medium and a customer class. The user requirement indicates a first customer class. The computing node 121 determines, based on the first customer class, a storage medium associated with the first customer class from the association relationship, and determines that the storage medium associated with the first customer class is used to store the processed data. Example 2: The computing node 121 determines, based on the user requirement and the storage medium characteristic, to write the processed data into the storage space that is of a storage node and that is indicated by the first address in the global memory pool. The storage space that is of the storage node and that is indicated by the first address meets the first customer class indicated by the user requirement.

In this way, when selecting, from the global memory pool, the storage medium for storing the processed data, the computing node 121 dynamically selects, based on a user requirement of the user for a storage medium characteristic such as an access speed or reliability, a storage medium that meets the user requirement, to ensure a scenario requirement of data processing performance and the reliability.

In some other embodiments, the computing node 121 is configured with priorities that are of the plurality of types of storage media and that are determined based on the storage medium characteristic, and determines, based on the priorities that are of the plurality of types of storage media and that are indicated by the storage policy, the storage medium used to store the processed data. The priorities of the plurality of types of storage media may be determined based on access speeds of the storage media. For example, an access speed of a memory is higher than an access speed of a hard disk, and an access speed of the hard disk is higher than an access speed of an extended storage medium. The priorities of the plurality of types of storage media may be determined based on priorities of deployment modes. For example, a priority of a local storage medium is higher than a priority of the extended storage medium. The priorities of the plurality of types of storage media may be comprehensively determined based on characteristics of the plurality of types of storage media. The priorities of the plurality of types of storage media are determined based on the priorities of deployment modes (for example, the local storage medium and the extended storage medium). Priorities of storage media in the same deployment mode may be determined based on the access speeds of the storage media.

Optionally, the computing node 121 may further select, from the plurality of types of storage media that meet the user requirement, a storage medium whose available storage capacity is greater than a threshold as the storage medium for storing the processed data.

The computing node 121 determines, based on the priorities of the plurality of types of storage media, starting from a storage medium with a highest priority, whether an available storage capacity of the storage medium with the highest priority is greater than the threshold, and if the available storage capacity of the storage medium with the highest priority is greater than the threshold, it indicates that the storage medium with the highest priority has redundant storage space for storing the processed data, and selects the storage medium with the highest priority to store the processed data. If the available storage capacity of the storage medium with the highest priority is less than or equal to the threshold, it indicates that the storage medium with the highest priority does not have redundant storage space for storing the processed data. In this case, the computing node 121 determines whether an available storage capacity of storage medium with a second highest priority is greater than the threshold, and the plurality of types of storage media are sequentially traversed, and finally determines the storage medium storing the processed data from the plurality of types of storage media.

It should be noted that, in an actual application, the storage policy may be set based on a service requirement, a scenario requirement, a user requirement, or the like. The foregoing descriptions of the storage policy are merely an example for description. For example, the storage policy may alternatively refer to a data localization preference, that is, the processed data is preferentially stored in the local storage medium in the global memory pool. For another example, the storage policy may alternatively refer to selecting, based on a weighted selection of an application on performance and costs, that performance first, a storage capacity first, costs first, or the like.

Before the computing node 121 selects, by using the storage policy, the storage medium for storing the processed data, to be specific, before step 523 is performed, the storage policy and configuration information of the plurality of types of storage media may be pre-configured.

The storage policy provided in this embodiment of this application may be applicable to at least one application supported by the foregoing data processing system 100, that is, big data, a database, high-performance computing, artificial intelligence, distributed storage, and cloud native. For example, when processing a big data service, a task in a big data service, or a global task of a system, the computing node 121 may use a storage policy when selecting a storage medium used to store intermediate data.

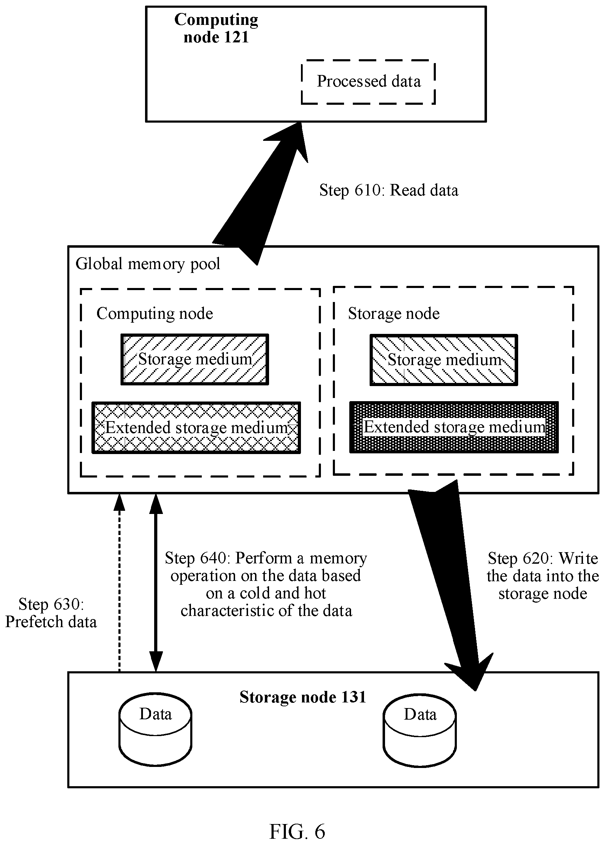

It should be noted that in this embodiment of this application, after the computing node 121 performs the memory operation on the global memory pool based on the processing request data, that is, after the processed data is written into the global memory pool or data is read from the global memory pool, it indicates that a current processing request ends. The global memory pool provides a capability of asynchronously writing the data to persistence and a capacity layer of the storage node, and a capability of prefetching and caching the data from the persistence and the capacity layer. Then, the computing node 121 or the storage node 131 may further read the processed data from the global memory pool. A data processing operation on data stored in the global memory pool is described in FIG. 6 below. FIG. 6 is a schematic flowchart of another data processing method for a converged system according to an embodiment of this application.

Step 610: The computing node 121 reads data from the global memory pool based on the first address, and processes the data.

When the computing node needs the data stored in the global memory pool to execute a task, the computing node may read related data from the global memory pool. For example, the computing node 121 is a computing node that executes a reduce task. The computing node 121 reads, from the global memory pool based on the first address, the processed data required for executing the reduce task. The computing node 121 may obtain the first address from the first address control node 122.

Step 620: The computing node 121 reads the data from the global memory pool based on the first address, and writes the data into the storage node 131.

When the data stored in the global memory pool needs to be persisted, that is, when the data stored in the global memory pool is migrated to the storage node, the computing node 121 may read related data from the global memory pool and write the related data into the storage node 131. The storage node 131 writes the processed data into a storage medium of the storage node 131 based on the memory operation instruction. Optionally, the computing node 121 may further store the data written into the storage node 131.

In some other embodiments, the computing node 121 may further perform step 630, that is, prefetch data from the storage node 131 based on the memory operation instruction, and store the data in the global memory pool. Therefore, the computing node 121 can obtain data as soon as possible, thereby shortening the end-to-end data processing duration.

The computing node 121 may further perform step 640, that is, perform a memory operation on data between the global memory pool and the storage node based on a characteristic of cold/hot data and the memory operation instruction.

Hot data refers to data that is frequently accessed, for example, online data. Cold data refers to data that is seldom accessed, such as enterprise backup data, service and operation log data, and call detail record and statistics data. The hot data requires high access frequency and high efficiency, so that nearby computing and deployment need to be implemented. The cold data requires low access frequency and low efficiency, and a centralized deployment can be implemented.

In this embodiment of this application, a global memory pool is constructed in a storage-computing separated architecture, and is used as a cache layer for unified computing and storage. The global memory pool converges storage and computing, and implements a logical convergence based on a physical separation. In this layer, a computing node and a storage node use unified memory semantics to perform data exchange and sharing, thereby avoiding repeated intermediate operations such as format conversion and protocol conversion between the computing node and the storage node, and achieving ultimate high performance and low power consumption.

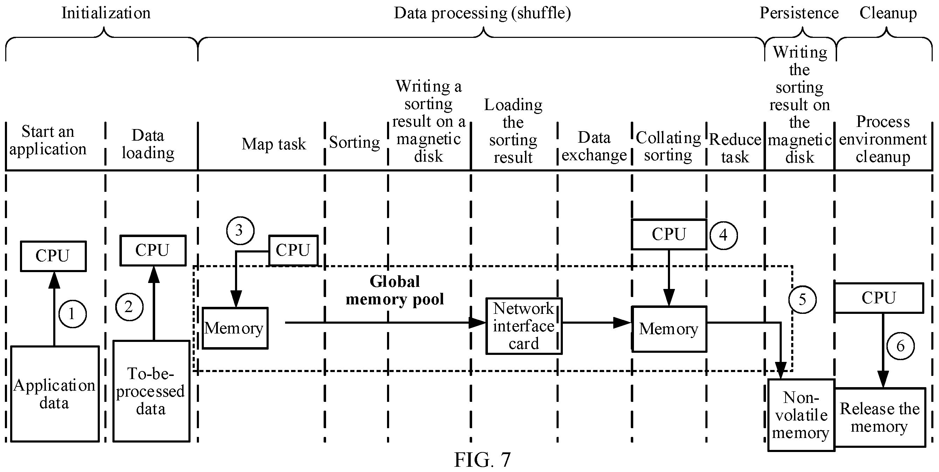

The following uses an example to describe a data processing process based on a converged system. FIG. 7 is a schematic diagram of a data processing process of executing a map task and a reduce task according to an embodiment of this application.
(1) Initialization phase: ① Application data is loaded, that is, a program configuration file is loaded and an application program is started. The application data may be stored in a non-volatile memory or a global memory pool, and a computing node loads the application data to a local memory of the computing node. For example, the computing node loads the application data from a non-volatile memory to the local memory in a direct memory access (Direct Memory Access, DMA) manner, or loads the application data through a virtual file system (Virtual File System, VFS) or a portable operating system interface (Portable Operating System Interface, POSIX) file system interface constructed above a memory level. ② To-be-processed data is loaded, where the to-be-processed data may be stored in the non-volatile memory, and the computing node loads the to-be-processed data to the local memory of the computing node. For example, the computing node obtains the to-be-processed data from a non-volatile memory pool based on the memory operation instruction, and loads the to-be-processed data to the local memory, thereby eliminating access overheads of a file system stack. The computing node may further obtain, through remote direct memory access (Remote Direct Memory Access, RDMA), the to-be-processed data stored on a remote node, to implement an efficient access, and reduce CPU overheads and network protocol stack overheads of a remote data access.
(2) Data processing phase: ③ The to-be-processed data is processed based on processing request data by executing the memory operation instruction, to obtain processed data. For example, each computing node sorts the processed data to obtain intermediate data. The computing node selects, from the global memory pool based on a data capacity of the processed data, a storage medium for storing the processed data. For example, storing the processed data in an HBM, a DRAM, or an SCM. When a storage capacity in the global memory pool is insufficient, a problem may be solved through remote memory expansion or memory disk expansion, that is, the processed data is stored in another storage medium. A destination node reads the intermediate data from a source node or a source node writes the intermediate data to a destination node to complete data exchange (shuffle). If the global memory pool is constructed through an independent storage medium (for example, a storage medium of the computing node and a storage medium of a storage node), the source node may write the intermediate data into the global memory pool, and then the destination node reads the intermediate data from the global memory pool. (4) Sorting results are combined.
(3) Persistence phase: ⑤ A test report and a collating sorting result are written into a local non-volatile memory or a local memory of the global memory pool, and a global memory pool component asynchronously writes the test report and the combined sorting result to storage space of the storage node.
(4) Cleanup phase: (6) The local memory or the global memory pool is released.

It may be understood that, to implement the functions in the foregoing embodiments, the computing device includes a corresponding hardware structure and/or software module for performing various functions. A person skilled in the art should be easily aware that, in combination with units and method steps in the examples described in embodiments disclosed in this application, this application can be implemented by using hardware or a combination of hardware and computer software. Whether a function is performed by using the hardware or the hardware driven by the computer software depends on a particular application scenario and design constraint of technical solutions.

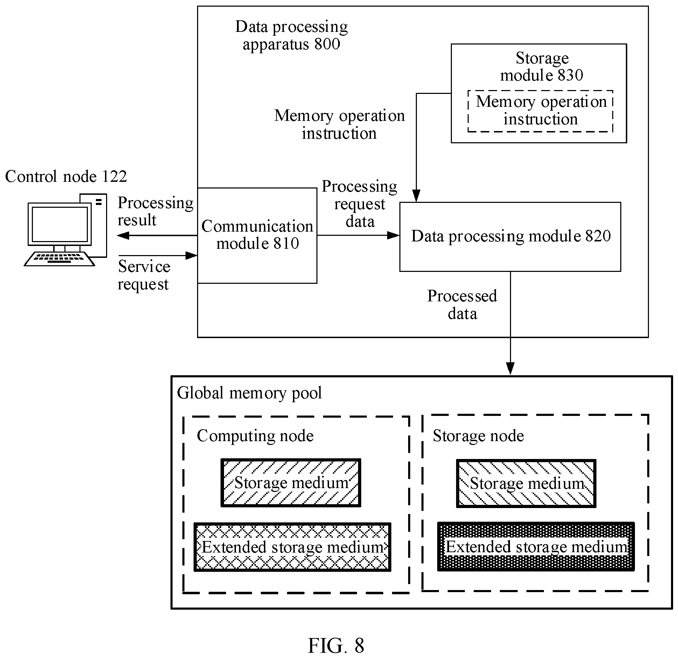

With reference to FIG. 1 to FIG. 7, the foregoing describes in detail the data processing method for the converged system provided in this embodiment. With reference to FIG. 8, the following describes a data processing apparatus provided in this embodiment.

FIG. 8 is a schematic diagram of a structure of a possible data processing apparatus according to an embodiment. These data processing apparatuses may be configured to implement functions of the computing device or the computing node in the foregoing method embodiments, and therefore can also implement beneficial effects of the foregoing method embodiments. In this embodiment, the data processing apparatus may be the computing node 121 shown in FIG. 5, or may be a module (such as a chip) used in a server.

As shown in FIG. 8, the data processing apparatus 800 includes a communication module 810, a data processing module 820, and a storage module 830. The data processing apparatus 800 is configured to implement a function of the computing node 121 in the method embodiment shown in FIG. 5.

The communication module 810 is configured to obtain the processing request data.

The data processing module 820 is configured to perform the memory operation of the processing request data on the global memory pool based on the memory operation instruction. For example, the data processing module 820 is configured to perform step 510 and step 520 in FIG. 5.

The storage module 830 is configured to store the memory operation instruction, so that the data processing module 820 obtains the processed data. For example, the communication module 810 is configured to perform S560 in FIG. 5.

The data processing module 820 is specifically configured to read the to-be-processed data and the application data from the global memory pool; and process, based on the processing request data, the to-be-processed data by executing the memory operation instruction, to obtain the processed data, and write the processed data into the storage space indicated by the first address in the global memory pool.

The data processing module 820 is further configured to read the processed data from the global memory pool based on the first address.

The data processing module 820 is further configured to prefetch data from the storage node based on the memory operation instruction, and store the data in the global memory pool.

The data processing module 820 is further configured to perform the memory operation on the data between the global memory pool and the storage node based on the characteristic of cold/hot data and the memory operation instruction.

It should be understood that the data processing apparatus 800 in this embodiment of this application may be implemented through an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof. Alternatively, when the data processing method shown in FIG. 5 or FIG. 6 is implemented by using software, the data processing apparatus 800 and the modules of the data processing apparatus 800 may alternatively be software modules.

The data processing apparatus 800 according to this embodiment of this application may correspondingly perform the methods described in embodiments of this application, and the foregoing and other operations and/or functions of the units in the data processing apparatus 800 are separately used to implement corresponding procedures of the methods in FIG. 5 or FIG. 6. For brevity, details are not described herein again.

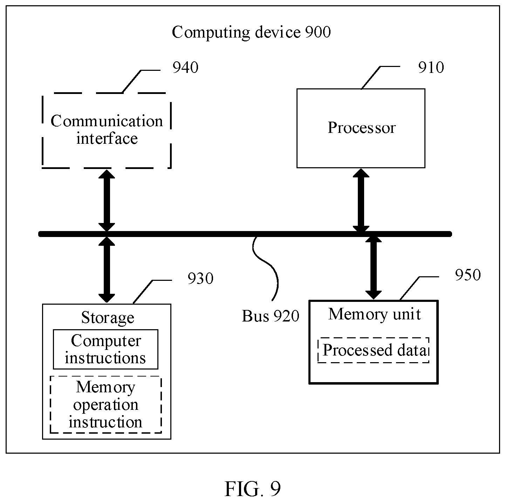

FIG. 9 is a schematic diagram of a structure of a computing device 900 according to an embodiment. As shown in the figure, the computing device 900 includes a processor 910, a bus 920, a storage 930, a communication interface 940, and a memory unit 950 (which may also be referred to as a main memory (main memory) unit). The processor 910, the storage 930, the memory unit 950, and the communication interface 940 are connected through the bus 920.

It should be understood that, in this embodiment, the processor 910 may be a CPU, or the processor 910 may be another general-purpose processor, a digital signal processor (digital signal processor, DSP), an ASIC, an FPGA or another programmable logic device, a discrete gate or transistor logic device, a discrete hardware component, or the like. The general-purpose processor may be a microprocessor or any conventional processor or the like.

Alternatively, the processor may be a graphics processing unit (graphics processing unit, GPU), a neural network processor (neural network processing unit, NPU), the microprocessor, the ASIC, or one or more integrated circuits configured to control program execution in the solutions of this application.

The communication interface 940 is configured to implement communication between the computing device 900 and an external device or component. In this embodiment, when the computing device 900 is configured to implement the function of the computing node 121 shown in FIG. 5, the communication interface 940 is configured to obtain the processing request data, and the computing node 121 performs the memory operation of the processing request data on the global memory pool based on the memory operation instruction.

The bus 920 may include a path, configured to transfer information between the foregoing components (for example, the processor 910, the memory unit 950, and the storage 930). In addition to a data bus, the bus 920 may further include a power bus, a control bus, a status signal bus, and the like. However, for clear description, various types of buses in the figure are marked as the bus 920. The bus 920 may be a peripheral component interconnect express (Peripheral Component Interconnect Express, PCIe) bus, an extended industry standard architecture (extended industry standard architecture, EISA) bus, a unified bus (unified bus, Ubus, or UB), a computer express link (compute express link, CXL), a cache uniform interconnect protocol (cache coherent interconnect for accelerators, CCIX), or the like. The bus 920 may be classified into an address bus, a data bus, a control bus, and the like.

In an example, the computing device 900 may include a plurality of processors. The processor may be a multi-core (multi-CPU) processor. The processor herein may be one or more devices, circuits, and/or computing units configured to process data (for example, a computer program instruction). In this embodiment, when the computing device 900 is configured to implement the function of the computing node 121 shown in FIG. 5, the processor 910 may perform, on the global memory pool based on the memory operation instruction, the memory operation of the processing request data.

It should be noted that, in FIG. 9, only an example in which the computing device 900 includes one processor 910 and one storage 930 is used. The processor 910 and the storage 930 are separately configured to indicate a type of component or device. In a specific embodiment, a quantity of components or devices of each type may be determined based on a service requirement.

The memory unit 950 may be corresponding to the global memory pool used to store information such as the processed data in the foregoing method embodiment. The memory unit 950 may be a volatile memory pool or a non-volatile memory pool, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The storage 930 may be corresponding to a storage medium that is configured to store information such as a computer instruction, a memory operation instruction, and a storage policy in the foregoing method embodiment, for example, a magnetic disk, such as a mechanical hard disk or a solid-state drive.

The computing device 900 may be a general-purpose device or a dedicated device. For example, the computing device 900 may be an edge device (such as a box carrying a processing capability chip), or the like. Optionally, the computing device 900 may alternatively be a server or another device having a computing capability.

It should be understood that the computing device 900 according to this embodiment may correspond to the data processing apparatus 800 in this embodiment, and may correspond to a corresponding body in any method according to FIG. 5 or FIG. 6. In addition, the foregoing and other operations and/or functions of the modules in the data processing apparatus 800 are separately used to implement corresponding procedures of the methods in FIG. 5 or FIG. 6. For brevity, details are not described herein again.

The method steps in this embodiment may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a computing device. Certainly, the processor and the storage medium may alternatively exist in the computing device as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data processing method for a converged system, wherein the converged system comprises a computing node and a storage node, the computing node is connected to the storage node through a network, and a storage medium of the computing node and a storage medium of the storage node form a global memory pool through unified addressing; and the method comprises:
obtaining processing request data; and
performing a memory operation of the processing request data on the global memory pool based on a memory operation instruction.

2. The method according to claim 1, wherein the memory operation instruction comprises at least one of memory allocation, memory setting, memory copying, memory movement, memory release, and memory comparison.

3. The method according to claim 2, wherein a storage medium of the global memory pool comprises a memory, a memory server, and a storage-class memory SCM.

4. The method according to any one of claims 1 to 3, wherein the performing a memory operation of the processing request data on the global memory pool based on a memory operation instruction comprises:
reading to-be-processed data from the global memory pool; and
processing the to-be-processed data based on the processing request data by executing the memory operation instruction, to obtain processed data, and writing the processed data into storage space indicated by a first address in the global memory pool.

5. The method according to claim 4, wherein the writing the processed data into storage space indicated by a first address in the global memory pool comprises:
determining, based on a user requirement and a storage medium characteristic, to write the processed data into the storage space indicated by the first address in the global memory pool, wherein the storage medium characteristic comprises at least one of a writing latency, a read latency, a total storage capacity, an available storage capacity, an access speed, central processing unit CPU consumption, an energy consumption ratio, and reliability.

6. The method according to claim 4 or 5, wherein the storage space indicated by the first address comprises one of storage space provided by the storage medium of the computing node and storage space provided by the storage medium of the storage node.

7. The method according to any one of claims 4 to 6, wherein after the writing the processed data into storage space indicated by a first address in the global memory pool, the method further comprises:
reading the processed data from the global memory pool based on the first address.

8. The method according to claim 7, wherein the reading the processed data from the global memory pool based on the first address comprises:
reading the processed data from the global memory pool based on the first address, and writing the processed data into the storage node.

9. The method according to claim 1, wherein the method further comprises:
prefetching data from the storage node based on the memory operation instruction, and storing the data in the global memory pool.

10. The method according to claim 1, wherein the method further comprises:
performing a memory operation on data between the global memory pool and the storage node based on a characteristic of cold/hot data and the memory operation instruction.

11. A data processing apparatus for a converged system, wherein the converged system comprises a computing node and a storage node, the computing node is connected to the storage node through a network, and a storage medium of the computing node and a storage medium of the storage node form a global memory pool through unified addressing; and the apparatus comprises:
a communication module, configured to obtain processing request data; and
a data processing module, configured to perform a memory operation of the processing request data on the global memory pool based on a memory operation instruction.

12. The apparatus according to claim 11, wherein the memory operation instruction comprises at least one of memory allocation, memory setting, memory copying, memory movement, memory release, and memory comparison.

13. The apparatus according to claim 12, wherein a storage medium of the global memory pool comprises a memory, a memory server, and a storage-class memory SCM.

14. The apparatus according to any one of claims 11 to 13, wherein when performing the memory operation of the processing request data on the global memory pool based on the memory operation instruction, the data processing module is specifically configured to:
read to-be-processed data from the global memory pool; and
process the to-be-processed data based on the processing request data by executing the memory operation instruction, to obtain processed data, and write the processed data into storage space indicated by a first address in the global memory pool.

15. The apparatus according to claim 14, wherein when writing the processed data into the storage space indicated by the first address in the global memory pool, the data processing module is specifically configured to:
determine, based on a user requirement and a storage medium characteristic, to write the processed data into the storage space indicated by the first address in the global memory pool, wherein the storage medium characteristic comprises at least one of a writing latency, a read latency, a total storage capacity, an available storage capacity, an access speed, central processing unit CPU consumption, an energy consumption ratio, and reliability.

16. The apparatus according to claim 14 or 15, wherein the storage space indicated by the first address comprises one of storage space provided by the storage medium of the computing node and storage space provided by the storage medium of the storage node.

17. The apparatus according to any one of claims 14 to 16, wherein
the data processing module is further configured to read the processed data from the global memory pool based on the first address.

18. The apparatus according to claim 17, wherein when reading the processed data from the global memory pool based on the first address, the data processing module is specifically configured to:
read the processed data from the global memory pool based on the first address, and write the processed data into the storage node.

19. The apparatus according to claim 11, wherein
the data processing module is further configured to prefetch data from the storage node based on the memory operation instruction, and store the data in the global memory pool.

20. The apparatus according to claim 11, wherein
the data processing module is further configured to perform a memory operation on data between the global memory pool and the storage node based on the memory operation instruction and a characteristic of cold/hot data.

21. A computing device, wherein the computing device comprises a storage and at least one processor, the storage is configured to store a group of computer instructions, and when executing the group of computer instructions, the processor performs operation steps of the method according to any one of claims 1 to 10.

22. A system, wherein the system comprises a storage node and a computing node, the computing node is connected to the storage node through a network, a storage medium of the computing node and a storage medium of the storage node form a global memory pool through unified addressing, and the computing node is configured to perform operation steps of the method according to any one of claims 1 to 10.
